# EUROPEAN PATENT APPLICATION

(11) **EP 3 812 019 A1**
(43) Date of publication of application: **28.04.2021**
(21) Application number: 20203631.5
(22) Date of filing: 23.10.2020
(51) Int. Cl.: A63F 13/85, A63F 13/352, A63F 13/355, A63F 13/69, A63F 13/61, A63F 13/792

(54) **COMPUTERIZED GAMING SYSTEM AND METHOD OF OPERATING THEREOF**

(30) Priority: 24.10.2019 US 201962925256 P; 26.08.2020 US 202017003415; 26.08.2020 EP 20192927
(71) Applicant: Playtech Software Limited, IM1 1EE Douglas (IM)
(72) Inventor: GOLOVKO, Anton, Tartu (EE); LOOS, Aleksei, 50407 Tartu (EE); KEERMA, Kaido, 51007 Tartu (EE); ADAMOV, Oleksiy, 02232 Kyiv (UA); GILBOA, Eran, GX111AA Gibraltar (GI); NARKISS, Eyal, Cliffside Park, New Jersey 07010 (US); BEN MORDECHAI, Offer, GX11 1AA Gibraltar (GI); STANISHEVSKYI, Yevhenii, 03191 Kyiv (UA)
(74) Representative: Modiano, Gabriella Diana

(57) **Abstract**

In a gaming environment including an aggregation platform, remote game servers (RGS) and Gaming Platform as a Service (GPAS), a method for operating an aggregation platform in a gaming environment. The method including associating a player with tokens and Features, where the tokens are usable to acquire the Features, monitoring operation of the player with the tokens in the games, and determining operation of Features in the games, based upon the operation of the player with the tokens.

## Description

### TECHNICAL FIELD

The presently disclosed subject matter relates to computerized gaming systems and more particularly to operating shared Features and states in computerized gaming systems, and methods thereof.

### BACKGROUND

The industry of computerized games is in the process of taking on a new shape, from providing traditional boxed products, toward providing games using service-oriented platforms, in a model of operation referred to as a "Game as a service (GaaS)". In the GaaS model, the actual game software can be stored on the hosting company's servers and streamed to the player's device as cloud gaming services on a subscription basis of the player. Traditionally, all data relating to the player and the player's activity in the game is stored on the user's computer. The GaaS model, providing cloud gaming services, involves technologies relating to how games are developed, deployed, and maintained, including monitoring a player's activity in the gaming system's level, and providing advanced game functionalities based on the player's activity.

Similar to other cloud computing services, cloud gaming services have many advantages compared to traditional gaming systems, such as scalability, ubiquitous and cross-platform support for providing an immersive gaming experience, cost effectiveness for system development, software distribution, etc. One of the advantages of the GaaS model is that GaaS augments the accessibility of games to players and allows them to play multiple games without installing them. However, this availability involves technological challenges relating to tracking data related to the user's activity during the various games, and consolidating this data at the gaming systems' end. Specifically, the gaming system needs to provide ability to effectively manage users' activity involving real time data tracking and deployment, supporting actions relating to instant approval and distribution of microtransactions, maintain subscription billing, and more.

### GENERAL DESCRIPTION

According to one aspect of the presently disclosed subject matter there is provided a gaming system, comprising:
an aggregation platform operatively communicating with at least one remote game server (RGS), the aggregation platform is configured to operatively communicate with a Gaming Platform as a Service (GPAS), the at least one RGS and the GPAS are configured for hosting a plurality of games to be provided to a plurality of players through players' devices,
wherein the GPAS is further configured for receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature,
wherein the aggregation platform comprising:
   a feature shop unit, configured to operatively communicate with the players' devices, and
   a token and feature service unit;
with respect to each player of the plurality of players operating a player's device, the aggregation platform is configured to:
   by the token and feature service unit, associate the player with a tokens balance comprising one or more tokens and with a Features balance comprising one or more Features, the Features have been acquired by the player, wherein each Feature is associated with a respective Feature's stake value;
   transmit the associated tokens balance and the Features balance to the player, through the GPAS;
   repeatedly monitor operation of the player, including:
      transmit, by the feature shop unit, the list of available Features to be displayed at the player's device;
      in response to receipt from the at least one RGS or the GPAS data on game events generated the plurality of games, continuously update, by the token and feature service unit, the tokens balance according to a predefined configuration; wherein the updated tokens balance over a selected time interval or portion thereof constitutes a token balance trail;
      receive, by the feature shop unit, a selection of a Feature from the list of available Features, wherein the Feature is operable in at least one game of the plurality of games,
      based on the selection, update, by the token and feature service unit, the tokens balance, by degrading the number of Feature's cost value;
      determine a Feature's stake value of the selected Feature, based on the tokens balance trail, and associate the selected Feature with the determined Feature's stake;
      add the selected Feature, by the token and feature service unit, to the Feature's balance, thereby enabling operation of the selected Feature, according to the feature's stake, and
      transmit the updated Feature balance to the player's device, by the feature shop unit.

In addition to the above features, the method according to this aspect of the presently disclosed subject matter can optionally comprise the following features, in any technically possible combination or permutation:
i. wherein token and feature service unit is further configured to transmit the updated token balance to the player, through the GPAS.

According to another aspect of the presently disclosed subject matter there is provided a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players through players' devices, wherein the aggregation platform comprising:
   a feature shop unit, operatively communicating with the players' devices; and
   a token and feature service unit;
wherein the GPAS further receiving from the aggregation platform data pertaining to tokens balance and/or Features balance, both associated with a player, and providing the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature, the method comprising:
   by a processor of the aggregation platform, with respect to each player of the plurality of players:
   by the token and feature service unit, associating the player with a tokens balance comprising one or more tokens and with a Features balance comprising one or more Features, the Features have been acquired by the player, wherein each Feature is associated with a respective Feature's stake value;
   transmitting the associated tokens balance and the Features balance to the player, through the GPAS;
   repeatedly monitoring operation of the player, including:
      transmitting, by the feature shop unit, the list of available Features to be displayed at the player's device;
      in response to receipt from the at least one RGS or the GPAS data on game events generated the plurality of games, continuously updating, by the token and feature service unit, the tokens balance according to a predefined configuration; wherein the updated tokens balance over a selected time interval or portion thereof constitutes a token balance trail;
      receiving, by the feature shop unit, from the player's device, a selection of a Feature from the list of available Features, wherein the Feature is operable in at least one game of the plurality of games,
      based on the selection, updating, by the token and feature service unit, the tokens balance, by degrading the number of Feature's cost value;
      determining a Feature's stake value of the selected Feature, based on the tokens balance trail, and associate the selected Feature with the determined Feature's stake;
      adding the selected Feature, by the token and feature service unit, to the Feature's balance, thereby enabling operation of the selected Feature, according to the feature's stake, and
      transmits the updated Feature balance, by the feature shop unit, to the player's device.

According to another aspect of the presently disclosed subject matter there is provided a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players, the GPAS is further receiving from the aggregation platform data pertaining to tokens balance and/or one or more states, both associated with a player, and provides the data to the player,
wherein each of the states has a respective predefined value in terms of a number of tokens, and wherein each state is applied in one or more games of the plurality of games, based on a respective state's operational conditions, the method comprising:
   by a processor of the aggregation platform, with respect to each player of the plurality of players:
   associating the player with a tokens balance comprising one or more tokens;
   associating the player with one or more states, based on the respective predefined value, and applying the one or more states in one or more games based on their respective state's operation conditions; and
   repeatedly monitoring operation of the player, including:
      in response to receipt from the at least one RGS or the GPAS data on game events generated in the plurality of games, continuously updating the tokens balance according to a predefined configuration,wherein the updated tokens balance over a selected time interval or portion thereof constitutes a token balance trail;
      determining that the updated tokens balance reaching a predefined value of one or more ofthe states, thereby the one or more states constituting states-to-update;
      determining respective state's operation conditions for each one of the states-to-update, based on the tokens balance trail, and associating each of the one or more states-to-update with the respective determined state's operation conditions; and
      associating the player with the states-to-update.

In addition to the above features, the method according to this aspect of the presently disclosed subject matter can optionally comprise one or more of features (i) to (ii) below, in any technically possible combination or permutation:
i. wherein the method further comprising:
   applying the one or more states-to-update in one or more games, based on the associated state's operational conditions;
ii. wherein the method further comprising:
   updating the tokens balance, based on the one or more states-to-update, by degrading the respective state predefined value of each one or more states-to-update.

According to another aspect of the presently disclosed subject matter there is provided a gaming system, comprising:
an aggregation platform configured to operatively communicate with at least one remote game server (RGS), the aggregation platform further configured to operatively communicate with a Gaming Platform as a Service (GPAS), the at least one RGS and the GPAS configured to host a plurality of games to be provided to a plurality of players, the GPAS is further configured to receive from the aggregation platform data pertaining to tokens balance and/or one or more states, both associated with a player, and to provide the data to the player,
wherein each of the states has a respective predefined value in terms of a number of tokens, and wherein each state is applied in one or more games of the plurality of games, based on a respective state's operational conditions,
with respect to each player of the plurality of players operating a player's device, the aggregation platform is configured to:
   associate the player with a tokens balance comprising one or more tokens;
   associate the player with one or more states, based on the respective predefined value, and applying the one or more states in one or more games based on their respective state's operation conditions; and
   repeatedly monitor operation of the player, including:
      in response to receipt from the at least one RGS or the GPAS data on game events generated in the plurality of games, continuously update the tokens balance according to a predefined configuration, wherein the updated tokens balance over a selected time interval or portion thereof constitutes a token balance trail;
      determine that the updated tokens balance reaching a predefined value of one or more ofthe states, thereby the one or more states constituting states-to-update;
      determine respective state's operation conditions for each one of the states-to-update, based on the tokens balance trail, and associating each of the one or more states-to-update with the respective determined state's operation conditions; and
      associate the player with the states-to-update.

According to yet another aspect of the presently disclosed subject matter there is provided a gaming system for operating one or more game Features, comprising:
an aggregation platform configured to operatively communicate with one or more remote game servers (RGS), configured for hosting a plurality of games to be provided to a plurality of players through players' devices,
wherein at least one RGS of the one or more RGS is a designated RGS configured to receive from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature,
with respect to each player of the plurality of players operating a player's device, the aggregation platform is configured to:
   associate the player with a tokens balance comprising one or more tokens and with a Features balance comprising one or more Features, the Features have been acquired by the player, wherein each Feature is associated with a respective Feature's stake value;
   transmit the associated tokens balance and the Features balance to the player, through the designated RGS;
   repeatedly monitor operation of the player, including:
      transmit the list of available Features to be displayed at the player's device;
      in response to receipt from the one or more remote game servers (RGS) data on game events generated in the plurality of games, continuously update, the tokens balance according to a predefined configuration; wherein the updated tokens balance over a selected time interval or portion thereof constitutes a token balance trail;
      receive, from the player's device, a selection of a Feature from the list of available Features, wherein the Feature is operable in at least one game of the plurality of games,
      based on the selection, update, the tokens balance, by degrading the number of Feature's cost value;
      determine a Feature's stake value of the selected Feature, based on the tokens balance trail, and associate the selected Feature with the determined Feature's stake;
      add the selected Feature, to the Feature's balance, thereby enabling operation of the selected Feature, according to the feature's stake.

According to another aspect of the presently disclosed subject matter there is provided a method of operating an aggregation platform, comprising:
providing an aggregation platform operatively communicating with one or more remote game servers (RGS) hosting a plurality of games to be provided to a plurality of players through players' devices,
wherein at least one RGS of the one or more RGS is a designated RGS receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature, the method comprising:
   by a processor of the aggregation platform, with respect to each player of the plurality of players:
   associating the player with a tokens balance comprising one or more tokens and with a Features balance comprising one or more Features, the Features have been acquired by the player, wherein each Feature is associated with a respective Feature's stake value;
   transmitting the associated tokens balance and the Features balance to the player, through the designated RGS;
   repeatedly monitoring operation of the player, including:
      transmitting the list of available Features to be displayed at the player's device;
      in response to receipt from the one or more remote game servers (RGS) data on game events generated in the plurality of games, continuously updating, the tokens balance according to a predefined configuration; wherein the updated tokens balance over a selected time interval or portion thereof constitutes a token balance trail;
      receiving, from the player's device, a selection of a Feature from the list of available Features, wherein the Feature is operable in at least one game of the plurality of games,
      based on the selection, updating, the tokens balance, by degrading the number of Feature's cost value;
      determining a Feature's stake value of the selected Feature, based on the tokens balance trail, and associate the selected Feature with the determined Feature's stake;
adding the selected Feature, to the Feature's balance, thereby enabling operation of the selected Feature, according to the feature's stake.

According to another aspect of the presently disclosed subject matter there is provided a non-transitory computer readable storage medium tangibly embodying a program of instructions that, when executed by a computer, cause the computer to perform a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players through players' devices, wherein the aggregation platform comprising:
   a feature shop unit, operatively communicating with the players' devices; and
   a token and feature service unit;
wherein the GPAS further receiving from the aggregation platform data pertaining to tokens balance and/or Features balance, both associated with a player, and providing the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature, the method comprising:
   by a processor of the aggregation platform, with respect to each player of the plurality of players:
   by the token and feature service unit, associating the player with a tokens balance comprising one or more tokens and with a Features balance comprising one or more Features, the Features have been acquired by the player, wherein each Feature is associated with a respective Feature's stake value;
   transmitting the associated tokens balance and the Features balance to the player, through the GPAS;
   repeatedly monitoring operation of the player, including:
      transmitting, by the feature shop unit, the list of available Features to be displayed at the player's device;
      in response to receipt from the at least one RGS or the GPAS data on game events generated the plurality of games, continuously updating, by the token and feature service unit, the tokens balance according to a predefined configuration; wherein the updated tokens balance over a selected time interval or portion thereof constitutes a token balance trail;
      receiving, by the feature shop unit, from the player's device, a selection of a Feature from the list of available Features, wherein the Feature is operable in at least one game of the plurality of games,
      based on the selection, updating, by the token and feature service unit, the tokens balance, by degrading the number of Feature's cost value;
      determining a Feature's stake value of the selected Feature, based on the tokens balance trail, and associate the selected Feature with the determined Feature's stake;
      adding the selected Feature, by the token and feature service unit, to the Feature's balance, thereby enabling operation of the selected Feature, according to the feature's stake, and
      transmits the updated Feature balance, by the feature shop unit, to the player's device,.

According to another aspect of the presently disclosed subject matter there is provided a non-transitory computer readable storage medium tangibly embodying a program of instructions that, when executed by a computer, cause the computer to perform a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players, the GPAS is further receiving from the aggregation platform data pertaining to tokens balance and/or one or more states, both associated with a player, and provides the data to the player,
wherein each of the states has a respective predefined value in terms of a number of tokens, and wherein each state is applied in one or more games of the plurality of games, based on a respective state's operational conditions, the method comprising:
   by a processor of the aggregation platform, with respect to each player of the plurality of players:
   associating the player with a tokens balance comprising one or more tokens;
   associating the player with one or more states, based on the respective predefined value, and applying the one or more states in one or more games based on their respective state's operation conditions; and
   repeatedly monitoring operation of the player, including:
      in response to receipt from the at least one RGS or the GPAS data on game events generated in the plurality of games, continuously updating the tokens balance according to a predefined configuration,wherein the updated tokens balance over a selected time interval or portion thereof constitutes a token balance trail;
      determining that the updated tokens balance reaching a predefined value of one or more ofthe states, thereby the one or more states constituting states-to-update;
      determining respective state's operation conditions for each one of the states-to-update, based on the tokens balance trail, and associating each of the one or more states-to-update with the respective determined state's operation conditions; and
      associating the player with the states-to-update.

According to another aspect of the presently disclosed subject matter there is provided a non-transitory computer readable storage medium tangibly embodying a program of instructions that, when executed by a computer, cause the computer to perform a method of operating one or more game Features, comprising:
providing an aggregation platform operatively communicating with one or more remote game servers (RGS) hosting a plurality of games to be provided to a plurality of players through players' devices,
wherein at least one RGS of the one or more RGS is a designated RGS receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature, the method comprising:
   by a processor of the aggregation platform, with respect to each player of the plurality of players:
   associating the player with a tokens balance comprising one or more tokens and with a Features balance comprising one or more Features, the Features have been acquired by the player, wherein each Feature is associated with a respective Feature's stake value;
   transmitting the associated tokens balance and the Features balance to the player, through the designated RGS;
   repeatedly monitoring operation of the player, including:
      transmitting the list of available Features to be displayed at the player's device;
      in response to receipt from the one or more remote game servers (RGS) data on game events generated in the plurality of games, continuously updating, the tokens balance according to a predefined configuration; wherein the updated tokens balance over a selected time interval or portion thereof constitutes a token balance trail;
      receiving, from the player's device, a selection of a Feature from the list of available Features, wherein the Feature is operable in at least one game of the plurality of games,
      based on the selection, updating, the tokens balance, by degrading the number of Feature's cost value;
      determining a Feature's stake value of the selected Feature, based on the tokens balance trail, and associate the selected Feature with the determined Feature's stake;
      adding the selected Feature, to the Feature's balance, thereby enabling operation of the selected Feature, according to the feature's stake.

### BRIEF DESCRIPTION OF THE DRAWINGS

In order to understand the invention and to see how it can be carried out in practice, embodiments will be described, by way of non-limiting examples, with reference to the accompanying drawings, in which:
Fig. 1 shows a high-level illustration of a computerized gaming environment 100 in accordance with certain embodiments of the presently disclosed subject matter;
Fig. 2 illustrates a high-level functional block diagram of several entities in the gaming environment, in accordance with certain embodiments of the presently disclosed subject matter;
Fig. 3 illustrates a generalized diagram of feature acquisition flow, in accordance with certain embodiments of the presently disclosed subject matter;
Fig. 4 illustrates a general flowchart of operations performed by platform 101 in order to operate shared Features, in accordance with certain embodiments of the presently disclosed subject matter;
Fig. 5 illustrates a high-level functional block diagram of several entities in the gaming environment configured to operate shared States, in accordance with certain embodiments of the presently disclosed subject matter; and
Fig. 6 illustrates a general flowchart of operations performed by platform 101 in order to operate shared States, in accordance with certain embodiments of the presently disclosed subject matter.

### DETAILED DESCRIPTION

As apparent from the following discussions, and unless specifically stated otherwise, it is appreciated that throughout the specification discussions utilizing terms such as "providing", "communicating", "hosting", "using", "acquiring", "associating", "transmitting", "monitoring", "updating", "calculating", "using", "transmitting", "generating", "adding", "maintaining", "receiving", "operating", "displaying", "determining", "enabling", "applying", "degrading", "sending", "pressing", or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the gaming system disclosed in the present application.

The operations in accordance with the teachings herein may be performed by a computer specially constructed for the desired purposes, or by a general-purpose computer specially configured for the desired purpose by a computer program stored in a non-transitory computer-readable storage medium.

According to certain embodiments of the presently disclosed subject matter, gaming environments involve a large number of separate entities, operating and communicating through a complex network and architecture. Content, such as games, are created by a content creator or content provider, and are stored on Remote Gaming Servers (RGSs) around the world. A game can be stored on more than one RGS. A licensee of a casino, also to be referred to herein as an operator, can choose to operate one or more games by adding them to the operator's portfolio, while the games themselves are stored on a single RGS or multiple RGSs. Operation of the games is subject to various dynamic parameters and configurations, some of which are dictated by local legislation and some being determined or structured by the content creator, the licensee operator, or the RGS itself. In addition, the games can communicate with external systems, such as backend and management systems of the licensee operators, player management systems, various analytic systems, and wallet management systems. In order to provide GaaS mode of operation in a smooth manner, a gaming system needs to constantly track a player's activity during the various games and provide the required gaming functionalities. As such, there is a constant communication of data pertaining to the content stored on a particular RGS, e.g. the games, between entities operating in the network.

Tracking the user's activity in several games hosted by RGSs, and aggregating the data at a higher level than the RGSs hosting the particular games, enables the entity that aggregates the data, to provide additional services to the player, which may be spread to several games, e.g. to games belonging to a specific suit of games. Also, the data gathered in one game, including the user activity and betting in one game, can be used to provide services in another game, or provide advanced services to game operators.

According to certain embodiments of the presently disclosed subject matter, the gaming system can provide the player with Features, e.g. in-game options and/or out-game options, to be operated in games, based on the player's activity in other games. In order to do so, the gaming system can monitor and aggregate data pertaining to the player's activity in one or more games hosted by RGSs. The aggregated data includes data on game events generated in the games. Based on the aggregated data, the gaming system can determine how to operate a Feature that is provided to the player.

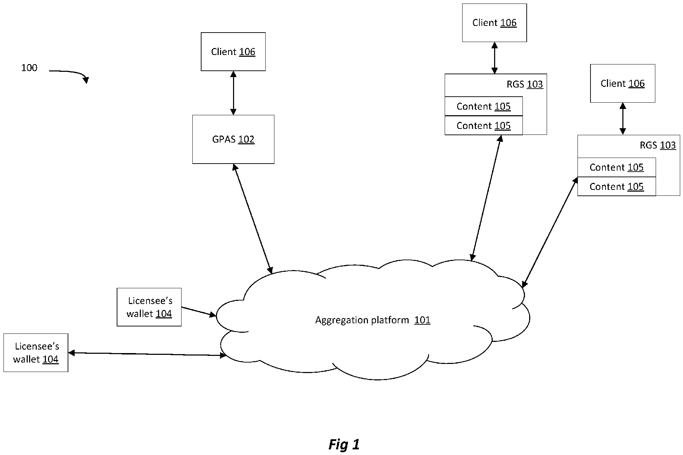

Bearing this in mind, attention is drawn to Fig. **1** illustrating a generalized diagram of a computerized gaming environment **100** in accordance with certain embodiments of the currently presented subject matter.

An aggregation platform **101** is operatively connected to one or more Remote Gaming Servers (RGSs) **103** each hosting one or more content pieces **105,** e.g. games. The aggregation platform **101** is also operatively connected to one or more additional RGSs, denoted by GPAS **102,** configured in accordance with certain embodiments of the currently presented subject matter. The aggregation platform **101** is further operatively connected to several instances of licensee's wallet systems denoted as **104.**

In some examples, the aggregation platform **101** is configured to aggregate RGSs from different providers and enable a unified point of integration to licensees. GPAS **102** is configured to communicate with aggregation platform **101** as an RGS e.g. via TPI (Third Party Interface) protocol, as defined by a TPI Specification published by the Gaming Standards Association). GPAS **102** can be further configured to enable the GaaS-mode of operation and is referred to hereinafter as GPAS (Gaming Platform as a Service). GPAS **102** can be configured to enable all necessary game management functions (e.g. executing and resolving game logic, game flows, error flows, regulation requirements, etc.). It can be also configured to provide front-end technologies (e.g. games development kit (GDK)) as well as to generate and deliver game clients to players' browsers. GPAS allows games to be authored once and deployed into multiple channels (e.g. enables omni-channel content delivery to desktop, mobile, casino and/or retail environment).

In some cases, aggregation platform **101** is configured to provide a player with tokens to be used in game operation. Tokens can be considered as a shared currency between the games. In some examples, tokens can be generated by the games. In some examples, tokens can be generated in one game, and be spent by the player, in another game. In some examples, the currency, e.g. the tokens, can also be generated outside of the games, e.g. by a licensee of the game. In some examples, tokens can be acquired by players with real money.

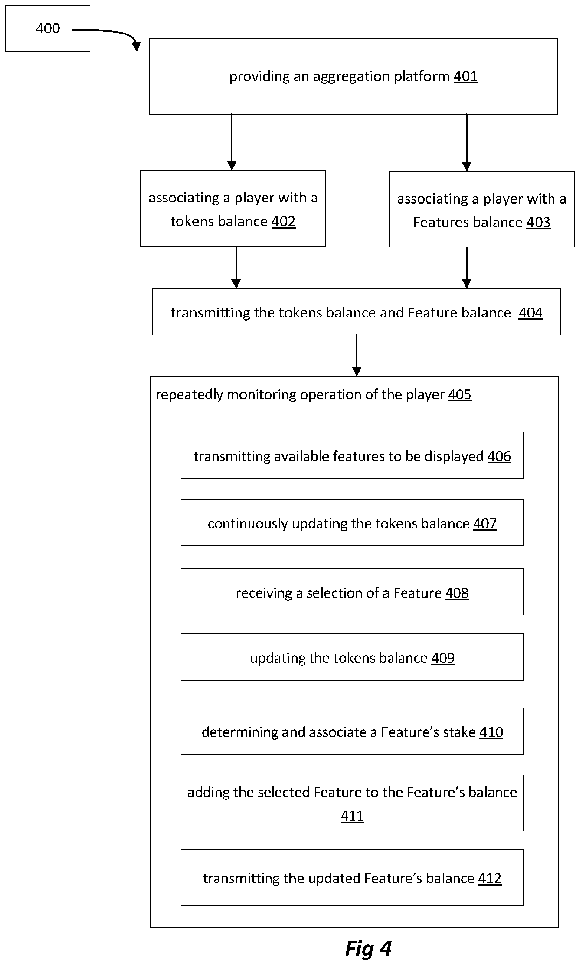

In some cases, tokens can be used by the player to acquire shared Features. Aggregation platform **101** is configured to provide the player with one or more Features to be operated in one or more of the plurality of games. The term "Feature" should be expansively construed to cover any kind of game, in-game options and/or out-game options defined as acquirable by tokens. The term "Feature" includes games and/or options that can be triggered with and/or without spending tokens. For example, the Features can be in-game options and/or out-game options, such as pick bonus or free game. Each Feature has a respective predefined cost value in terms of a number of tokens. For example, the predefined cost value of a Feature can be the Feature cost, i.e. the number of tokens required to acquire the Feature (*fCost*). In addition, each Feature is further characterised by a Feature's stake (*fStake*) value. in some examples, a Feature's stake value represents the total bet of the player in the games. A Feature's stake value is determined at the time of a feature acquisition, based on history of actions of the player over time, as reflected by tokens, as further explained below with respect to a Token balance trail. The Feature's stake is used during a Feature operation, in accordance with Feature logic. For example, if the Feature is free games, then Feature Stake is total bet per free games' spin. If Feature is a pick bonus, then Feature Stake is a value to be multiplied by the bonus item multiplier. Determining a Feature's stake value is further described below with respect to Fig. **4****.** Traditionally, in known systems, a Feature is provided to a player, and can be operated in a single game played by the player. In such known systems, the Feature's stake is calculated based on the players activity in the single game and the pending token balance is dependent on the single game only. In some cases, according to the presently disclosed subject matter, aggregation platform **101** is configured to provide a player with Features to be operated in one or more of the plurality of games, based on activity of the player in the plurality of games, and based on token balance dependent on the plurality of games. Aggregation platform **101** is configured to aggregate data pertaining to players' activity in the plurality of games, and to determine the Feature's stake, based on activity in the plurality of games. Aggregating the data from the plurality of games and determining the Feature's stake based on the aggregated data enables aggregation platform **101** to provide to a player Features to be operated in the plurality of games. In some non-limiting examples, aggregation platform **101** is configured to aggregate data that pertains to the activity of a player in a plurality of games, and provide the player with a Feature to be operated in a new game, for which data on the user's activity was not received and aggregated by the aggregation platform **101.**

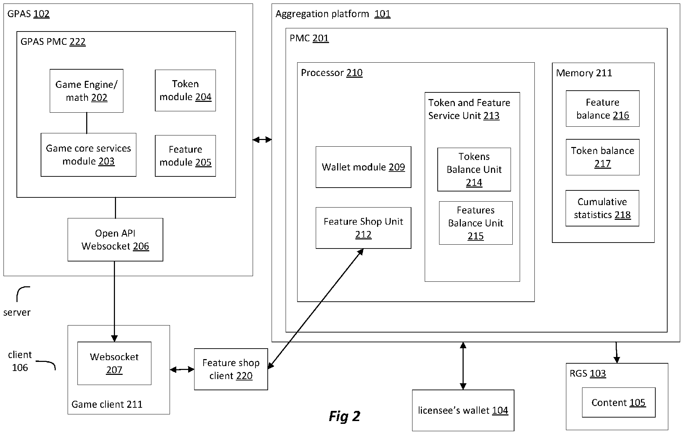

Referring to Fig. **2****,** there is illustrated a high-level functional block diagram of several entities in the gaming environment, in accordance with certain embodiments of the currently presented subject matter. Aggregation platform **101** is configured to enable operation of one or more Features in a plurality of games, based on a player's activity in the plurality of games. In some cases, aggregation platform **101** comprises a processor and memory circuitry (PMC) **201** comprising a processor **210** and a memory **211.** The processor in PMC **201** is configured to execute several functional modules in accordance with computer-readable instructions implemented on a non-transitory computer-readable storage medium. Such functional modules are referred to hereinafter as comprised in the processor. The processor **210** can comprise wallet module **209,** Feature Shop unit **212** and Token and Feature service Unit **213.** Token and Feature service Unit **213** can comprise Tokens Balance unit **214** and Features Balance unit **215.** Memory **211** can store, for each player, Feature balance **216,** tokens balance **213** and cumulative statistics **218.** The Feature balance **216,** tokens balance **213** and cumulative statistics **218** are dynamically updated, based on game events of the player as received from GPAS **102** and RGS **103,** as explained further below.

In some cases, aggregation platform **101** can operatively be connected to GPAS **102.** GPAS **102** is operatively coupled to one or more clients **106** configured to run one or more games clients **211.** GPAS **102** can further be operatively coupled, directly or via platform **101,** to licensee's wallet **104.** GPAS **102** comprises a processor and memory circuitry (PMC) **210** comprising a processor and a memory (not shown separately). The processor in GPAS PMC **222** is configured to execute several functional modules in accordance with computer-readable instructions implemented on a non-transitory computer-readable storage medium. Such functional modules are referred to hereinafter as comprised in the processor of GPAS PMC **222.** The processor of PMC GPAS **210** can comprise game engine/math **202,** game core services module **203,** token module **204** and Feature module **205.** GPAS **102** is implemented on a server and comprises a hardware-based interface configured as an open API websocket, denoted by open API websocket **206,** enabling communication with websocket **207** of a client **106.** GPAS can be configured to operate both as a client and as a server. The client side, e.g. a game UI, is denoted by client **106.** The server side, e.g. game engine/math **202** in GPAS **102** is denoted by GPAS **102** being a server. When a GPAS game client **211** runs in a browser at a client **106** side, it creates a connection to GPAS **102** server, e.g. to game engine/math **202** included in GPAS **102.** Game engine/math **206** is operatively connected to game core services module **203.** Game core services module **203** can comprise several service functional modules configured to provide core services necessary for hosting game engines (e.g. random number generation, game history service, state persistence service, message routing service, regulatory compliance services, etc.). A combination of a game client **211** with a Game Engine/match **202** configured to run on GPAS, constitutes a GPAS game and enables the GaaS mode of operation of GPAS **102.**

In some cases, aggregation platform **101** is configured to enable operation of one or more Features in a plurality of games, based on player's activity in the plurality of games. In order to monitor a player's activity in the games, Token and Feature Service Unit **213** , e.g. using Tokens Balance Unit **214,** is configured to associate a player with a tokens balance, for example, when the player places a new bet. Token and Feature Service Unit **213** is configured to transmit the associated tokens balance to the GPAS **102,** e.g. to token module **204.** Token module **204** is configured to provide token services to client **106,** including e.g. displaying the tokens balance to the client and generating new tokens based on token math as stipulated e.g. by game engine/math **202.** The tokens are usable by the player in plurality of games hosted by the RGSs **103** and the GPAS **102,** for example to acquire Features to be operated in the plurality of games. Feature module **205** is configured to receive Features balance from aggregation platform **101** and display the Features balance to the player. The Feature's balance includes at least one Feature available to be acquired by the player.

In some case, Tokens Balance Unit **214** is configured to update the token balance, based on data on game events received at aggregation platform **101.** Hence, in response to receipt from one or more RGSs or the GPAS, data on game events generated in games, Tokens Balance Unit **214** is further configured to dynamically update the tokens balance, according to a predefined gaming configuration. Game events can include for example, a new player started to play, a new bet was placed by an existing player, a new game has been started by the player, in-game event such as winning a certain payout size, triggering a specific in-game bonus free game or receiving no wins for a number of game rounds, a licensee operating a game activated a promotional event, scheduled event and predefined money deposit. In some examples, game events can include a player acquiring tokens with real money. The predefined configuration can include configuration relating to allocating new tokens or decreasing a number of tokens when any of the above events occur.

In some examples, the tokens balance is updated in response to receipt of game events from the plurality of RGSs or the GPAS, and hence, it is aggregated across multiple games and RGSs. The updated tokens balance over a selected time interval or portion thereof constitutes a token balance trail. As explained further below, the token balance trail may be used to determine on the Feature's stake.

In some examples, the updated tokens balance is sent to the GPAS **102,** e.g. to token module **204** to provide the updated tokens balance to the user, for example by displaying it to the player through player's devices. Optionally, token module **204** generates new tokens.

In some cases, aggregation platform **101** is further configured to associate a player with one or more Features. Some examples of Features include a game, in-game options, and out-game options. Features can be acquired by the tokens, wherein each Feature can have respective predefined cost value in terms of a number of tokens, and wherein each of the Features is operable in a game. The operation of the Feature in a game is dependent on a Feature's stake value associated with the respective Feature. A Feature's stake value is determined at the time of a feature acquisition, e.g. as calculated by the wallet module **209,** based on the history of actions of the player. The Feature's stake is usable during a Feature operation at client **106,** in accordance with Feature logic. Determining a Feature's stake value is further described below.

In some cases, a Feature shop client **220,** a client component, operatively communicates with both aggregation platform **101,** e.g. through Feature Shop unit **212,** and with game client **211.** Feature shop client **220** is configured to receive from Feature Shop unit **212** data pertains to one or more available Features to a player, and data pertains to Tokens balance. In some examples, game client **211** can direct a player to Feature shop client **220,** e.g. by pressing a designated link on the game. Feature shop client **220** is configured to display to the player the available Features which can be acquired by him, and his current Tokens balance. The player can acquire a desired Feature, by selecting a Feature from the available displayed Features.

In some cases, the updated tokens balance over a selected time interval or portion thereof constitutes a token balance trail. The trail can be referred to as the history of player's activity, as reflected by the tokens, in a time interval. This activity may include the number of bets placed by a player in the games, and the amount of size of the bets. The token balance trail can include data indicative of the updates made to the token balance in response to receipt of game events, over a time interval or a portion thereof. The length of the time interval can be dynamically determined by the aggregation platform **101,** for example, the aggregation platform **101** may determine that the time interval determining the trail is **1** past day, **1** past week etc. Alternatively or additionally, aggregation platform **101** may determine that at a given time period, the time interval may be shorter or longer than the general determined time interval.

Upon selection of the Feature by the player, wallet module **209** comprised in Aggregation platform **101** is configured to calculate player's statistics, based on the tokens balance trail of the player. The statistics may relate to the total number of bets and the size of the bets, include e.g. frequency of betting over time interval, average bet amount, etc. The calculated player's statistics can then be used to determine a Feature's stake value of the Feature selected by the player. Once a feature's stake is determined, Token and Feature service Unit **213,** e.g. by Feature balance unit **215,** is configured to update the Feature's balance **212** stored in Memory **211** with the selected Feature with the determined Feature's stake, thereby enabling operation of the selected Feature in one or more games. The calculation of the Feature's stake is further described below with respect to Fig. **4****.** The updated Feature's balance **216** may be transmitted by Feature Shop unit **212** to the player, e.g. by Feature shop client **220,** and the player can activate the acquired Feature.

It is noted that the teachings of the presently disclosed subject matter are not bound by the entities described with reference to Figs. **1** and **2****.** Equivalent and/or modified functionality can be consolidated or divided in another manner and can be implemented in any appropriate combination of software with firmware and/or hardware and executed on a suitable device. In certain embodiments, aggregation platform **101** and/or GPAS **102** can be implemented in multi-tenancy clustered architecture so that multiple instances of each server component run across multiple server nodes, providing both resilience and scalability. Wallet Module **209** can comprise a plurality of separate wallets (per each licensee) implemented on the same or on different servers; optionally, part of the functions of the separate wallets can be integrated in a centralized manner. In certain embodiments, at least some of the described functional modules such as Feature Shop Unit **212,** Token and Feature service Unit **213,** Feature shop client **220** and other entities can be implemented as a standalone entity (or as entities), apart of other entities (such as comprised totally or partially in other entities illustrated in Fig. **2****,** and may operatively connected to one or more of the GPAS **102,** the aggregation platform **101** or game client **211.**

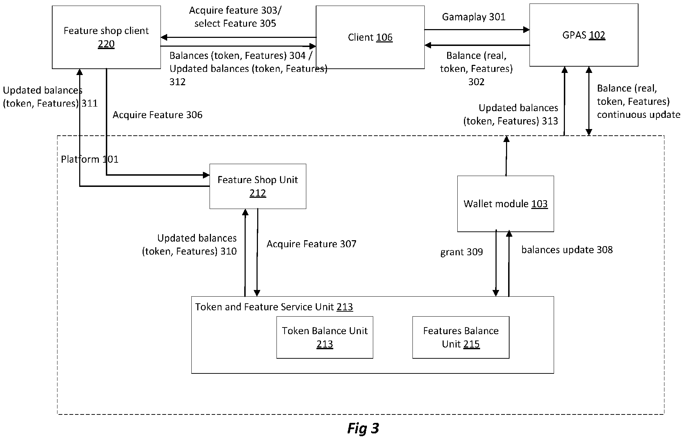

Reference is now being made to Fig. **3****,** illustrating a generalized diagram of feature acquisition flow in accordance with certain embodiments of the presently disclosed subject matter.

A game framework comprises a gameplay flow when client **106** interchanges game data with GPAS **102,** e.g. when client **106** starts or ends a game hosted by GPAS or places a new bet. GPAS **102** is configured to transmit to client **106** data on the player's balances, e.g. Tokens balance, Features balance and "real money" balance. Token balance may include all tokens of the player, Feature balance may include one or more Features previously acquired by the player and "real money" balance may include current money balance of the player. The data on Tokens balance, Features balance and "real money" balance may be transmitted from aggregation platform **101** to GPAS **102** in accordance with the continuously update of data between aggregation platform **101** and GPAS **102.**

In some examples, Client **106** issues a request to acquire a Feature, e.g. by pressing a designated link on the game. Feature Shop client **220** displays to client **106** a list of Features, including one or more Features available for acquisition by client **106,** and the current Token balance of the player. In some examples, Feature shop client **220** received the data on the current Token balance from Feature Shop Unit **212.** Upon a display of the available Features and Tokens to the player, the player may select one or more Features to acquire. In such cases, Feature shop client **220** receives a selection of a Feature from client **106.** Responsive to the selection, Feature Shop client **220** sends to Feature Shop unit **212** an "Acquire Feature" request specifying the selected Feature and the number of tokens to be reduced. The number of tokens may be the predefined cost value of the selected Feature. Feature shop unit **212** transmits the received "Acquire Feature" request to Token and Feature service Unit **213.** Upon receiving the request, Token and Feature service Unit **213** sends to Wallet Module **103** respective data on token and Feature balances update, and receives a grant, when appropriate. In response to receipt of a grant, data on updated Feature and Token balances is sent to Feature Shop unit **212.** The updated Feature balance may include data indicative of the addition of the granted Feature to the Feature balance. The updated tokens balance may include the number of tokens in the balance, after degrading the number of tokens according to the Feature's cost value of the selected Feature. Token and Feature service Unit **213** transmits to Feature Shop client **220** the updated balances which are then transmitted to client **106,** optionally, for consumption of the selected Feature.

Upon sending the grant to Token Service Unit **213** (grant **309**), Wallet Module **103** updates the Feature and Token balances and sends the updated balances to GPAS **102.** GPAS **102** may transmit the received updated balance to client **106.**

Referring now to Fig. **4****,** there is illustrated a general flowchart of operations performed in aggregation platform **101,** in accordance with certain embodiments of the presently disclosed subject matter. The stages below are illustrated with respect to entities in the gaming environment illustrated with respect to Figs. **2** and **3****.** However, this should not be considered as limiting and those skilled in the art will readily appreciate that the stages below can, likewise, be executed by other/ different entities in a gaming environment.

In some cases, an aggregation platform **101** is provided. The aggregation platform **101** operatively communicating with at least one remote game server (RGS) **103.** The aggregation platform **101** further operatively communicating with a Gaming Platform as a Service (GPAS) **102.** Both the RGS **103** and the GPAS **102** hosting a plurality of games to be provided to a plurality of players (block **401).** In some examples, the GPAS **102** operating as an RGS and providing GaaS mode of operation.

In some cases, the aggregation platform **101** comprising a feature shop unit **212.** Feature shop unit **212** operatively communicating with a feature shop client **220,** which in turn, operatively communicating with the players' devices, such as game client **211.** In addition, the aggregation platform **101** comprising a token and feature service unit **213.**

In some examples, the GPAS **102** exchanges with aggregation platform **101** data that pertains to the activity of the player in a game. Hence, the GPAS **102** may receive from the aggregation platform **101,** e.g. by token and feature service unit **213,** data pertaining to tokens balance and/or Features balance, both associated with a player, and provides the received data to the player.

In some cases, the tokens can be used by the player in a plurality of games, for example to acquire one or more Features from a list of available Features. Each of the Features has a respective predefined cost value in terms of a number of tokens. For example, the predefined cost value of a Feature can be the Feature cost in a number of tokens required to acquire the Feature (*fCost*). In some examples, the predefined Feature cost may vary, e.g. upon determining of a limited time discount for all Features. In cases where more than one type of token was generated, the predefined cost value of a Feature may vary, depending on the type of tokens, and/or a combination thereof.

In addition, each Feature is further characterised by a Feature's stake (*fStake*) value. In some examples, a Feature's stake value represents the total bets of the player in the games. A Feature's stake value is determined at the time of a feature acquisition, based on the history of actions of the player over time, e.g. based on the Token balance trail.

In some cases, for each player of the plurality of players, the processor **210** of the aggregation platform **101** may executes the stages referred to in blocks **402-412.** Token and feature service unit **213** associates a player with a tokens balance comprising one or more tokens (block **402).**

In addition, in some cases, Token and feature service unit **213** further associates the player with a Features balance comprising one or more Features (block **403).** The Feature balance includes the Features acquired by the player which are pending to be operated in one or more games. Each Feature is associated with a respective Feature's stake value, e.g. as determined when the Feature was acquired.

In some examples, the tokens balance and Features balance can be stored e.g. in Token balance **217** and Feature balance **216** in memory **211.**

The associated tokens balance and Features balance are then transmitted to the player, e.g. through GPAS **102** (block **404).**

Upon receipt of the associated token balance and the Feature balance by GPAS **102,** and before transmitting the balance to the player, token module **204** in GPAS **102.** can generate tokens to the player, based on the received associated tokens balance, e.g. responsive to gaming configuration. As mentioned above, game configuration can include predefined game events such as new player, new bet, new game, in-game event, promotional event, scheduled event, certain money deposit. The tokens can be generated automatically and/or in response to a player's purchasing thereof. In some examples, aggregation platform **101** can associate at least two types of tokens to a player. In such examples, at least two respective token balance are associated with the player and are transmitted to GPAS **102.** Upon receipt of the associated by the GPAS **102,** processor in PMC **222** generates at least two types of tokens and the player is associated with at least two separate tokens balances per each token type, respectively. In these examples, in response to receipt from the at least one RGS or the GPAS of the data on game events, token and Feature Service Unit **2013** continuously updates the balance of a first token type, and does not update the balance of the second token type.

For purpose of illustration only, the following description of tokens and updating tokens balance is provided for gaming systems configured to enable spin-based games. Those skilled in the art will readily appreciate that the teachings of the presently disclosed subject matter are, likewise, applicable to gaming systems configured to enable other games using RTP-based math (e.g. baccarat, lottery, poker, bingo, scratch card game, wheel of lucks, etc.)

By way of non-limiting example, each given player can be associated with three different types of tokens that are maintained, e.g. by wallet module **209:** game tokens (GTs), pending game tokens (PGTs) and promotional tokens (PTs). Accordingly, processor **210** can associate each given player with three separate balances per each token type. Optionally, processor **210** associates and transmits data on all three balances to GPAS **102,** while GPAS **102** determines to display only the balances of GTs and PTs to the player, and determines to display the balance of PGTs to a licensee of the game only.

In some examples, the processor **210** associates with a player a random number, based on an outcome of a random number generator (less than a predefined max number) of GTs on every bet the player places in the game. Optionally, processor **210** associates with a player a random number of GTs responsive to other predefined game events. Optionally, each number of provided GTs can have an associated weight. By way of non-limiting example, depending on the number of provided GTs, the weight can decrease with increase of the number of provided game tokens. By way of alternative non-limiting example, depending on the number of provided GTs, the weight can increase by increasing the number of provided game tokens.

Once the token balances were associated with the player, the are transmitted to the player through GPAS **102,** e.g. by displaying them to game client **211.** Following are non-limiting examples of a display. Processor in PMC **222** can randomly distribute the signs of provided GTs over the reels. Distribution of token signs on reels is defined by the math of the respective game. For example, the math can allow showing token signs only on certain reels, or restrict token signs on some symbols. Distribution and visualization of the provided GTs can be implemented in different ways. By way of non-limiting example, GT signs can appear as though they are coming from the reels together with symbols. Optionally, it can be possible to show several GT signs above the same symbol. By way of other non-limiting examples:
- in a slot machine, special symbols or combinations of symbols can increase the number of GTs;
- in roulette, a designated sector can increase the number of GTs;
- in blackjack, a card value and/or suit can determine the number of collected GTs; etc.

Referring back to Fig. **4****,** in some cases, processor **210** repeatedly monitors operation of the player (block **405).** Monitoring the operation enables the aggregation platform **101** to provide usage of Features in a plurality of games, based on activity of the players in the games, as reflected by the Tokens. Monitoring the operation of the Features can be done by the operations denoted in blocks **406-411.**

Feature shop unit **212** can transmit the available Features to be displayed at the player's device (block **406).** In some examples, the list can include one or more Features to be acquired by the player. The player can choose to operate one or more of the available features in one or more games.

In response to receipt from at least one RGS or the GPAS data on game events generated in one or more of the plurality of games token and feature service unit **213** continuously updates the tokens balance according to a predefined configuration (block **407).** Unless specifically stated otherwise, it is appreciated that throughout the specification the terms "continuously updating" or the like refer to receiving (in push or pull mode) data substantially each time new data is available to aggregation platform **101** and/or responsive to predefined events (including scheduled events and events occurring in accordance with predefined periodicity). In some examples, updating the token balance includes upgrading or degrading the number of tokens in the tokens balance. In some examples, updating the tokens balance includes selectively updating the tokens balance, for example, when data on game events is received, but the tokens balance is not updated based on the received data on game events.

To continue with the examples in which more than one token type is generated, in some examples, token and feature service unit **213** token and feature service unit **213** continuously update the PGT tokens balance by associating the player with PGT, e.g. every time it associates the player with a GT. In some examples, the number of PGTs provided on a given spin is a function of GTs provided on the same spin. Optionally, a licensee operating a game hosted on the at least one RGSs of the GPAS, can release one or more tokens of one or more token types, e.g. PGT (within the current PGT balance), to the player. The licensee can release, responsive to predefined events (e.g. a new player, an existing player when starting a new game, depositing a specific amount of money, triggering an in-game Feature, etc.). In response, token and feature service unit **213** updates the tokens balances by decreasing PGT tokens balance and increasing GT tokens balance by the number of released PGTs. Optionally, if the number of PGTs that a licensee wants to release exceeds PGTs balance, token and feature service unit **213** can suggest completing the remaining amount with PTs, responsive to which the PT tokens balance is decreased.

It is noted that neither GTs nor PGTs are provided in connection with a Feature's operation. It is further noted that GTs and PGTs affect the RTP (return to player) of the underlying game. Accordingly, the game math is generated in accordance with the predefined weights of random numbers of generated GTs and the number of PGTs depending on the number of generated GTs. Accordingly, the respective tokens' balances are continuously updated.

Yet another example of updating the tokens' balances of certain type of tokens, in some examples, the token and feature service unit **213** further enables a licensee to credit to a player one or more Promotional Tokens (PT) characterized by a predefined monetary value and lifetime. Upon receipt of an indication of a licensee that release PT to a player, the PT tokens' balance is updated accordingly. It should be noted that unlike GTs or PGTs, PTs have underlying monetary value credited by a licensee, together with PTs. The money thus credited to a player is a function of a number of credited PTs and an estimated average Games' stake of a player. Thus, the PT can be also outside of game RTP.

As detailed above, token and feature service unit **213** e.g. using wallet module **209** separately maintains GT, PGT and PT balances. In some examples, the overall balance status of a player can be in a regular mode, or in a capped mode. A player starts in a regular mode. In this mode, all types of tokens are available. A player's overall balance moves to a capped mode when the total amount of GTs and PTs reaches a predefined cap. It is noted that a player does not necessarily move to a capped phase when the number of PGTs reaches a cap, but only if, after transferring PGTs to the GT balance, the number of GTs and PTs reaches a cap. In capped mode, the player is not able to collect or receive any types of tokens until the total number of GTs and PTs becomes less than the cap and the player returns to the regular mode. The number of tokens is reduced when the player spends tokens to buy a Feature, and/or when some tokens expire. Optionally, the different tokens can be configured to have different consuming priority. By way of non-limiting example, GTs can have higher priority than PTs; within the same type, tokens with sooner expiry time can have a higher consuming priority.

As explained above, in the examples, more than one token type is generated and associated with the player. For example, the following tokens can be generated: GTs, PGTs, PTs tokens. In such cases, the player is associated with separate tokens balances for per each token type. In some examples, in response to receipt from the at least one RGS or the GPAS data on game events of a player, token and feature service unit **213** is configured to continuously update the balance of the first token type and does not update the balance of the second token type.

As explained, in response to receipt of data on game events, the tokens balance is continuously updated. In some cases, the updated tokens balance, over a selected time interval or portion thereof, constitutes the token balance trail.

In some cases, feature shop unit **212** receives from the player's device, e.g. through feature shop client **220** a selection by the player, of one or more Features from the list of available Features (block **408).** The selected Feature can be operated in at least one game of the plurality of games hosted by the RGS and the GPAS. In some examples, the selected feature is operable in more than one game. Yet, in some examples, the selected Feature is operable in a new, given, game, for which data on game events was not received by the aggregation platform **101,** and accordingly, aggregation platform **101** did not update the tokens balance based on game events that were generated in the given game.

In some cases, based on the selection, token and feature service unit **213** updates the tokens balance (block **409).** In some examples, updating the Feature's balance includes degrading the number of tokens according to the feature cost value of the selected Feature.

Based on the selection, tokens and feature service unit **213** determines a Feature's stake value of the selected Feature, based on the tokens balance trail and associates the determined Feature's stake with the selected Feature (block **410).** As described above, each Feature is characterized by a Feature cost in tokens (*fCost*) and by a Feature stake (*fStake*)*.* A Feature's stake value is determined at the time of a feature acquisition, based on the token balance trail as updated until the acquisition time.

In some examples, in order to determine a Feature's stake, tokens and feature service unit **213** calculates cumulative statistics of the player, at the time of acquisition ofthe Feature by the player. Cumulative statistics are indicative of the activity of a player in the games, and may be based on the bets placed by the player. Following is a non-limiting example of cumulative statistics used by wallet module **209.** Cumulative statistics of each given player include:
N - cumulative statistic that depends on a number of bets placed by a player, and
S - cumulative statistic that depends on a monetary sum of bets that are placed by a player.

The cumulative statistics can be stored e.g. in cumulative statistics **218** in memory **211.**

The cumulative statistics are updated responsive to usage tokens, as updated in Tokens balance **217.** Optionally, if more than one type of tokens is generated, e.g. game tokens (GTs), pending game tokens (PGTs) and promotional tokens (PTs), and separate balances are associated for each of the tokens types, the cumulative statistics can be updated responsive to decrease of the GT balance only. Yet, optionally, whenever game tokens (GT) balance decreases, either after expiry or buying a Feature, cumulative statistics are updated. The tokens balance trail over a selected time interval or portion thereof can be used to extract the above data for calculating the cumulative statistics.

By way of non-limiting example, once the cumulative statistics are calculated, tokens and feature service unit **213** calculates Estimated Average Stake of a player. The Estimated Average Stake can be calculated based on the cumulative statistics, the number of GT used to buy the Feature, the number and monetary value of PT used to acquire the Feature, and *fCost* of the Feature. In some examples, tokens and feature service unit **213** determines a Feature's stake as a function of the calculated Estimated Average Stake of the Player. For example, the Feature's stake can be identical to the Estimated Average Stake. Alternatively, the Feature's stake can be a manipulation of the Estimated Average Stake. Thus, the Feature's stake, while having the same cost in the number of tokens, is variable, depending on a player's cumulative statistics. Thus, two Features can have an identical *fCost* but different *fStake.*

In some cases, once the Feature's stake is determined and is associated with the selected Feature, token and feature service unit **213** adds the selected feature to the Feature's balance, thereby enabling operation of the selected Feature, according to the feature's stake (block **411).**

The update feature's balance is then transmitted, by the feature shop unit **212** to the player's device (block **412),** for example through Feature shop client **220.**

In some examples, the selected Feature that was acquired by the player is operated in a given game, for which data on game events in that given game were not received by aggregation platform **101,** and, accordingly, tokens balance was not updated based on such game events.

In some examples, Feature Shop Unit **212** further transmits the updated tokens balance to the player, e.g. by feature shop client **220** or by GPAS **102.** It should be noted that aggregation platform **101** uses the same token balance for the plurality of games across the RGSs and GPAS, and calculates cumulative statistics based on the updated tokens balance trail. The calculated cumulative statistics are then used to determine a Feature's stake to be operated in a game. Using the same token balance for the plurality of games, and calculating the cumulative statistics not only enables a player to use his activity in one game to acquire a Feature in another game, but also involves a technological advantage in a reduced computational resources and time by tracking a single balance for each token type for all games, without the need to track balances for each game, and continuously updates the balances in response to game events, which are known to be frequent, in a large amount and in real time, in a gaming environment. Also, the cumulative statistics already consider the possibility of variable bets by the player in the same game, or across games, thus monitoring is manageable in a single balance, without losing data on the player's activity.

The above gaming system and method was described with respect to a non-limiting example of a token balance that is updated based on a player's activity in various games, and with respect to Features, which can be acquired based on the player's activity as reflected by the tokens balance. However, the above non-limiting example of Features should not be considered as limiting, and other player or game parameters can be monitored and be updated based on the tokens balance. As such, following is a description of States that can be applied in one or more games. In some examples, States can be operated and be applied in a similar manner to Features and those skilled in the art will readily appreciate that the teachings of the presently disclosed subject matter is, likewise, applicable to States rather than to Features only. In some examples, States can include a state of user in a game or a state relating to achievements of the user such as reaching a certain game stage or obtaining certain measurable points. For example, states may include 'a pick bonus', 'number of in-game free spins', 'a multiplier of winnings' 'certain pre-determined symbols in the game result' or a 'visual effect'.

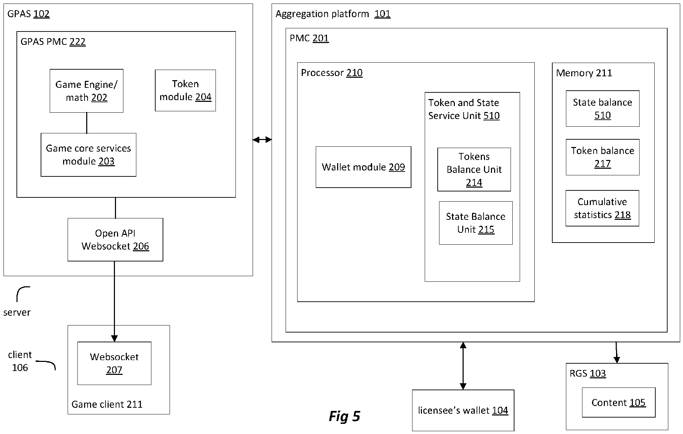

Having that in mind, reference is now being made to Figs. **5****,** illustrating a high-level functional block diagram of several entities in the gaming environment configured to operate shared States, in accordance with certain embodiments of the presently disclosed subject matter.

In some cases, several entities appearing Fig. **2** appear also in Fig. **5** and are configured to operate in a similar manner with respect to both Features, as described above, and with respect to shared States, as illustrated below. Also, new entities, included in the block diagram of Fig. **5****,** may correspond in functionality of entities appearing in Fig. **2****,** and hence, the disclosure above with respect to these entities is also applicable with respect to the entities appearing in Fig. **5****.**

As such, aggregation platform **101** may be provided. The aggregation platform **101** includes PMC **201,** and processor **210** and memory **211,** as illustrated in Fig. **2****.** Processor **201** includes several entities similar to Fig. **2****,** and further includes Token and State Service Unit **510** which mayfunction in a similar manner to Token and State Service Unit **213** of Fig. **2****.** Token and State Service Unit **510** comprising Tokens Balance Unit **214** and State Balance Unit **215** configured to monitor the player's state. In a similar manner to Fig. **2****,** memory **211** may store State balance **510,** in addition to tokens balance **217** and Cumulative statistics **218.**

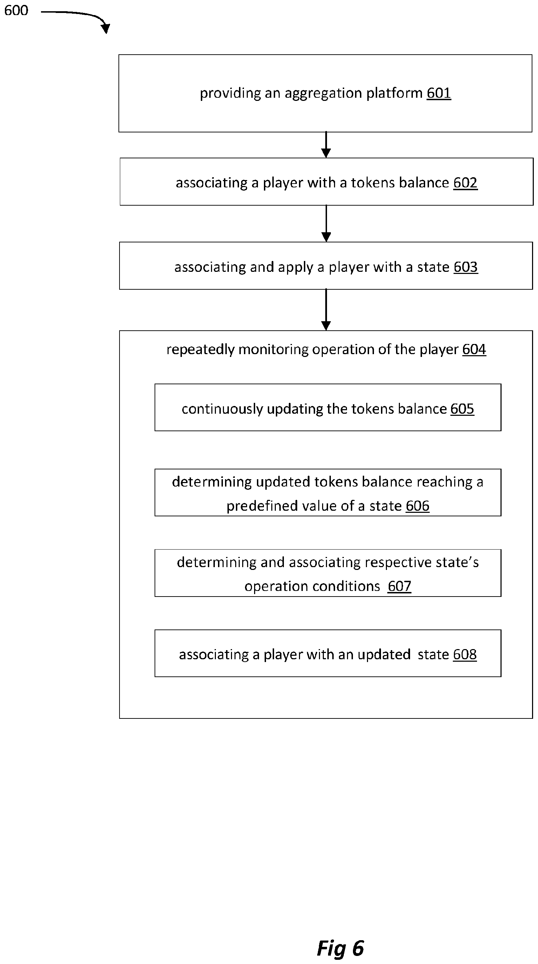

Reference in now being made to Fig. **6****,** illustrating a general flowchart of operations performed by platform **101** appearing in Fig. **5****,** in order to operate shared States, in accordance with certain embodiments of the presently disclosed subject matter. Reference is being made to the disclosure made with respect to operations in Fig. **4****,** as applicable also to operations performed in Fig. **6****.**

In some cases, an aggregation platform **101** is provided (block **610).** Similar to the disclosure of operations relating to block **401,** the aggregation platform **101** operatively communicating with at least one remote game server (RGS) **103,** the aggregation platform further operatively communicating with a Gaming Platform as a Service (GPAS) **102.** The at least one RGS **103** and the GPAS **102** hosting a plurality of games to be provided to a plurality of players. In some examples, the GPAS **102** further receives from the aggregation platform **101** data pertaining to tokens balance and/or one or more states, both associated with a player, and provides the data to the player.

In some examples, each state has a respective predefined value in terms of a number of tokens, in a similar manner to that described above with respect to predefined cost value of a Feature. In some examples, each state may be applied in one or more games of the plurality of games, based on a respective state's operational conditions. A respective state's operational conditions may be defined in a similar manner to that described above with respect to Feature's stake and is further described below.

In some cases, the processor of aggregation platform **101,** e.g. by Token and State Service Unit **510,** associates a player with a tokens balance comprising one or more tokens (block **602),** in a similar manner to that described above with respect to block **402.**

In addition, in some cases, the processor of aggregation platform **101,** e.g. Token and State Service Unit **510,** further associates the player with a state balance comprising one or more states. In some examples, associating the states is based on the respective predefined value of each state. For example, Token and State Service Unit **510** may determine that based on the token balance, a predetermined value of one or more states has been reached. In response, Token and State Service Unit **510** may determine associate the state with the player, and in some examples, applying the one or more states in one or more games based on their respective state's operation conditions (block **603).** Since applying a state does not require acquisition or selection by a user, a state may be applied by aggregation platform, when, based on the tokens balance, the predetermined value of the state has been reached. The state may be applied based on its respective state's operation conditions. The state's operation conditions are further described below.

Processor **210** repeatedly monitors operation of the player (block **604),** in a similar manner to that described above with respect to block **405.** Monitoring the operation enables the aggregation platform **101** to apply a shared in a plurality of games, based on activity of the players in the games, as reflected by the Tokens balance. Monitoring the operation of the Features can be done by the operations denoted in blocks **605-607.**

In some examples, in response to receipt from the at least one RGS or the GPAS data on game events generated in the plurality of games, processor **210** continuously updates the tokens balance according to a predefined configuration, wherein the updated tokens balance over a selected time interval or portion thereof constitutes a token balance trail (block **605).** Receiving data on game events, and updating tokens balance can be done in a similar manner to the described above with respect to block **407.**

In some cases, processor **210** determines that the updated tokens balance reaches a predefined value of one or more of the states (block **606).** For example, processor **210** may constantly compare the tokens balance to the predefined value of the states, and flag when the tokens balance reaches one of the predefined values. The one or more states for which the predefined values have been reached may constitute states-to-update.

In some examples, processor **210** then determines respective state's operation conditions for each one of the states-to-update, based on the tokens balance trail, and associates each of the one or more states-to-update with the respective determined state's operation conditions (block **607).** In some examples, the state operational conditions are determined based on the tokens balance trail with respect to the category of the state. For example, for player status state, the state's operation conditions may be based on the status of the player in a game, as reflected by the on the tokens balance trail. For example, if the game provides a prize when the player obtains a certain number of levels, and obtaining each level is dependent on the tokens balance trail, then the state's operation conditions can be determined to be the current level obtained by the player. However, this should not be considered as limiting and those skilled in the art will readily appreciate that other states operational conditions, which may be based also on cumulative statistics, in a similar manner to that described above with respect to block **410.**

Once the state's operation conditions of the states-to-update are determined, processor **210,** e.g. using State Balance Unit **215,** may associate the player with the states-to-update (block **608),** e.g. by adding them to state balance **510** stored in memory **211.** In some examples, processor **210** apply the one or more states-to-update in one or more games, based on the associated state's operational conditions.

Optionally, the tokens balance is updated, based on the one or more states-to-update, e.g. by degrading the state predefined value of each one or more states-to-update.

It is noted that the teachings of the presently disclosed subject matter are not bound by the game flow and flow chart illustrated in Figs. **3****,** **4** and **6****,** and that the illustrated operations can occur out of the illustrated order. For example, operations **402,** and **403** or **602** and **603** shown to be executed in ap articular sequence, can occur in succession, can be executed substantially concurrently, or in the reverse order. It is also noted that whilst the flow chart is described with reference to elements of system aggregation platform **101,** GPAS **102** and Feature shop client **220** this is by no means binding, and the operations can be performed by elements other than those described herein.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A gaming system, comprising:
an aggregation platform operatively communicating with at least one remote game server (RGS), the aggregation platform is configured to operatively communicate with a Gaming Platform as a Service (GPAS), the at least one RGS and the GPAS are configured for hosting a plurality of games to be provided to a plurality of players through players' devices,
wherein the GPAS is further configured for receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature,
wherein the aggregation platform comprising:
a feature shop unit, configured to operatively communicate with the players' devices, and
a token and feature service unit;
with respect to each player of the plurality of players operating a player's device, the aggregation platform is configured to:
by the token and feature service unit, associate the player with a tokens balance comprising one or more tokens and with a Features balance comprising one or more Features, the Features have been acquired by the player, wherein each Feature is associated with a respective Feature's stake value;
transmit the associated tokens balance and the Features balance to the player, through the GPAS;
repeatedly monitor operation of the player, including:
transmitting, by the feature shop unit, the list of available Features to be displayed at the player's device;
in response to receipt from the at least one RGS or the GPAS data on game events generated the plurality of games, continuously update, by the token and feature service unit, the tokens balance according to a predefined configuration; wherein the updated tokens balance over a selected time interval or portion thereof constitutes a token balance trail;
receive, by the feature shop unit , a selection of a Feature from the list of available Features, wherein the Feature is operable in at least one game of the plurality of games,
based on the selection, update, by the token and feature service unit, the tokens balance, by degrading the number of Feature's cost value;
determine a Feature's stake value of the selected Feature, based on the tokens balance trail, and associate the selected Feature with the determined Feature's stake;
add the selected Feature, by the token and feature service unit, to the Feature's balance, thereby enabling operation of the selected Feature, according to the feature's stake, and
transmit the updated Feature balance to the player's device, by the feature shop unit.

2. The gaming system of claim 1, wherein token and feature service unit is further configured to transmit the updated token balance to the player, through the GPAS.

3. A method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players through players' devices, wherein the aggregation platform comprising:
a feature shop unit, operatively communicating with the players' devices; and
a token and feature service unit;
wherein the GPAS further receiving from the aggregation platform data pertaining to tokens balance and/or Features balance, both associated with a player, and providing the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature, the method comprising:
by a processor of the aggregation platform, with respect to each player of the plurality of players:
by the token and feature service unit, associating the player with a tokens balance comprising one or more tokens and with a Features balance comprising one or more Features, the Features have been acquired by the player, wherein each Feature is associated with a respective Feature's stake value;
transmitting the associated tokens balance and the Features balance to the player, through the GPAS;
repeatedly monitoring operation of the player, including:
transmitting by the feature shop unit, the list of available Features to be displayed at the player's device;
in response to receipt from the at least one RGS or the GPAS data on game events generated the plurality of games, continuously updating, by the token and feature service unit, the tokens balance according to a predefined configuration; wherein the updated tokens balance over a selected time interval or portion thereof constitutes a token balance trail;
receiving, by the feature shop unit, from the player's device, a selection of a Feature from the list of available Features, wherein the Feature is operable in at least one game of the plurality of games,
based on the selection, updating, by the token and feature service unit, the tokens balance, by degrading the number of Feature's cost value;
determining a Feature's stake value of the selected Feature, based on the tokens balance trail, and associate the selected Feature with the determined Feature's stake;
adding the selected Feature, by the token and feature service unit, to the Feature's balance, thereby enabling operation of the selected Feature, according to the feature's stake, and
transmits the updated Feature balance, by the feature shop unit, to the player's device.

4. A method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players, the GPAS is further receiving from the aggregation platform data pertaining to tokens balance and/or one or more states, both associated with a player, and provides the data to the player,
wherein each of the states has a respective predefined value in terms of a number of tokens, and wherein each state is applied in one or more games of the plurality of games, based on a respective state's operational conditions, the method comprising:
by a processor of the aggregation platform, with respect to each player of the plurality of players:
associating the player with a tokens balance comprising one or more tokens;
associating the player with one or more states, based on the respective predefined value, and applying the one or more states in one or more games based on their respective state's operation conditions; and
repeatedly monitoring operation of the player, including:
in response to receipt from the at least one RGS or the GPAS data on game events generated in the plurality of games, continuously updating the tokens balance according to a predefined configuration,wherein the updated tokens balance over a selected time interval or portion thereof constitutes a token balance trail;
determining that the updated tokens balance reaching a predefined value of one or more of the states, thereby the one or more states constituting states-to-update;
determining respective state's operation conditions for each one of the states-to-update, based on the tokens balance trail, and associating each of the one or more states-to-update with the respective determined state's operation conditions; and
associating the player with the states-to-update.

5. The method of claim **4,** further comprising:
applying the one or more states-to-update in one or more games, based on the associated state's operational conditions.

6. The method of claim **4,** further comprising:
updating the tokens balance, based on the one or more states-to-update, by degrading the respective state predefined value of each one or more states-to-update.

7. A gaming system, comprising:
an aggregation platform configured to operatively communicate with at least one remote game server (RGS), the aggregation platform further configured to operatively communicate with a Gaming Platform as a Service (GPAS), the at least one RGS and the GPAS configured to host a plurality of games to be provided to a plurality of players, the GPAS is further configured to receive from the aggregation platform data pertaining to tokens balance and/or one or more states, both associated with a player, and to provide the data to the player,
wherein each of the states has a respective predefined value in terms of a number of tokens, and wherein each state is applied in one or more games of the plurality of games, based on a respective state's operational conditions,
with respect to each player of the plurality of players operating a player's device, the aggregation platform is configured to:
associate the player with a tokens balance comprising one or more tokens;
associate the player with one or more states, based on the respective predefined value, and applying the one or more states in one or more games based on their respective state's operation conditions; and
repeatedly monitor operation of the player, including:
in response to receipt from the at least one RGS or the GPAS data on game events generated in the plurality of games, continuously update the tokens balance according to a predefined configuration, wherein the updated tokens balance over a selected time interval or portion thereof constitutes a token balance trail;
determine that the updated tokens balance reaching a predefined value of one or more of the states, thereby the one or more states constituting states-to-update;
determine respective state's operation conditions for each one of the states-to-update, based on the tokens balance trail, and associating each of the one or more states-to-update with the respective determined state's operation conditions; and
associate the player with the states-to-update.

8. A gaming system for operating one or more game Features, comprising:
an aggregation platform configured to operatively communicate with one or more remote game servers (RGS), configured for hosting a plurality of games to be provided to a plurality of players through players' devices,
wherein at least one RGS of the one or more RGS is a designated RGS configured to receive from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature,
with respect to each player of the plurality of players operating a player's device, the aggregation platform is configured to:
associate the player with a tokens balance comprising one or more tokens and with a Features balance comprising one or more Features, the Features have been acquired by the player, wherein each Feature is associated with a respective Feature's stake value;
transmit the associated tokens balance and the Features balance to the player, through the designated RGS;
repeatedly monitor operation of the player, including:
transmit the list of available Features to be displayed at the player's device;
in response to receipt from the one or more remote game servers (RGS) data on game events generated in the plurality of games, continuously update, the tokens balance according to a predefined configuration; wherein the updated tokens balance over a selected time interval or portion thereof constitutes a token balance trail;
receive, from the player's device, a selection of a Feature from the list of available Features, wherein the Feature is operable in at least one game of the plurality of games,
based on the selection, update, the tokens balance, by degrading the number of Feature's cost value;
determine a Feature's stake value of the selected Feature, based on the tokens balance trail, and associate the selected Feature with the determined Feature's stake;
add the selected Feature, to the Feature's balance, thereby enabling operation of the selected Feature, according to the feature's stake.

9. A method of operating one or more game Features, comprising:
providing an aggregation platform operatively communicating with one or more remote game servers (RGS) hosting a plurality of games to be provided to a plurality of players through players' devices,
wherein at least one RGS of the one or more RGS is a designated RGS receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature, the method comprising:
by a processor of the aggregation platform, with respect to each player of the plurality of players:
associating the player with a tokens balance comprising one or more tokens and with a Features balance comprising one or more Features, the Features have been acquired by the player, wherein each Feature is associated with a respective Feature's stake value;
transmitting the associated tokens balance and the Features balance to the player, through the designated RGS;
repeatedly monitoring operation of the player, including:
transmitting the list of available Features to be displayed at the player's device;
in response to receipt from the one or more remote game servers (RGS) data on game events generated in the plurality of games, continuously updating, the tokens balance according to a predefined configuration; wherein the updated tokens balance over a selected time interval or portion thereof constitutes a token balance trail;
receiving, from the player's device, a selection of a Feature from the list of available Features, wherein the Feature is operable in at least one game of the plurality of games,
based on the selection, updating, the tokens balance, by degrading the number of Feature's cost value;
determining a Feature's stake value of the selected Feature, based on the tokens balance trail, and associate the selected Feature with the determined Feature's stake;
adding the selected Feature, to the Feature's balance, thereby enabling operation of the selected Feature, according to the feature's stake.

10. A non-transitory computer readable storage medium tangibly embodying a program of instructions that, when executed by a computer, cause the computer to perform a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players through players' devices, wherein the aggregation platform comprising:
a feature shop unit, operatively communicating with the players' devices; and
a token and feature service unit;
wherein the GPAS further receiving from the aggregation platform data pertaining to tokens balance and/or Features balance, both associated with a player, and providing the data to the player,
wherein the tokens are usable by the player to acquire one or more Features from a list of available Features, wherein each of the Features has a respective predefined cost value in terms of a number of tokens, and wherein each Feature is operable in one or more of the plurality of games, depending on a Feature's stake value associated with the respective Feature, the method comprising:
by a processor of the aggregation platform, with respect to each player of the plurality of players:
by the token and feature service unit, associating the player with a tokens balance comprising one or more tokens and with a Features balance comprising one or more Features, the Features have been acquired by the player, wherein each Feature is associated with a respective Feature's stake value;
transmitting the associated tokens balance and the Features balance to the player, through the GPAS;
repeatedly monitoring operation of the player, including:
transmitting, by the feature shop unit, the list of available Features to be displayed at the player's device;
in response to receipt from the at least one RGS or the GPAS data on game events generated the plurality of games, continuously updating, by the token and feature service unit, the tokens balance according to a predefined configuration; wherein the updated tokens balance over a selected time interval or portion thereof constitutes a token balance trail;
receiving, by the feature shop unit, from the player's device, a selection of a Feature from the list of available Features, wherein the Feature is operable in at least one game of the plurality of games,
based on the selection, updating, by the token and feature service unit, the tokens balance, by degrading the number of Feature's cost value;
determining a Feature's stake value of the selected Feature, based on the tokens balance trail, and associate the selected Feature with the determined Feature's stake;
adding the selected Feature, by the token and feature service unit, to the Feature's balance, thereby enabling operation of the selected Feature, according to the feature's stake, and
transmits the updated Feature balance, by the feature shop unit, to the player's device,.

11. A non-transitory computer readable storage medium tangibly embodying a program of instructions that, when executed by a computer, cause the computer to perform a method of operating an aggregation platform, comprising:
providing an aggregation platform operatively communicating with at least one remote game server (RGS), the aggregation platform further operatively communicating with a Gaming Platform as a Service (GPAS), the at least one RGS and the GPAS hosting a plurality of games to be provided to a plurality of players, the GPAS is further receiving from the aggregation platform data pertaining to tokens balance and/or one or more states, both associated with a player, and provides the data to the player,
wherein each of the states has a respective predefined value in terms of a number of tokens, and wherein each state is applied in one or more games of the plurality of games, based on a respective state's operational conditions, the method comprising:
by a processor of the aggregation platform, with respect to each player of the plurality of players:
associating the player with a tokens balance comprising one or more tokens;
associating the player with one or more states, based on the respective predefined value, and applying the one or more states in one or more games based on their respective state's operation conditions; and
repeatedly monitoring operation of the player, including:
in response to receipt from the at least one RGS or the GPAS data on game events generated in the plurality of games, continuously updating the tokens balance according to a predefined configuration,wherein the updated tokens balance over a selected time interval or portion thereof constitutes a token balance trail;
determining that the updated tokens balance reaching a predefined value of one or more of the states, thereby the one or more states constituting states-to-update;
determining respective state's operation conditions for each one of the states-to-update, based on the tokens balance trail, and associating each of the one or more states-to-update with the respective determined state's operation conditions; and
associating the player with the states-to-update.

12. A non-transitory computer readable storage medium tangibly embodying a program of instructions that, when executed by a computer, cause the computer to perform a method of operating one or more game Features, comprising:
providing an aggregation platform operatively communicating with one or more remote game servers (RGS) hosting a plurality of games to be provided to a plurality of players through players' devices,
wherein at least one RGS of the one or more RGS is a designated RGS receiving from the aggregation platform data pertaining to tokens balance and/or Features balance, both associated with a player, and to provide the data to the player,
wherein the tokens are usable by the player to acquire one or more Features from a list of available Features, wherein each of the Features has a respective predefined cost value in terms of a number of tokens, and wherein each Feature is operable in a game of the plurality of games, depending on a Feature's stake value associated with the respective Feature, the method comprising:
by a processor of the aggregation platform, with respect to each player of the plurality of players:
associating the player with a tokens balance comprising one or more tokens and with a Features balance comprising one or more Features, the Features have been acquired by the player, wherein each Feature is associated with a respective Feature's stake value;
transmitting the associated tokens balance and the Features balance to the player, through the designated RGS;
repeatedly monitoring operation of the player, including:
transmitting the list of available Features to be displayed at the player's device;
in response to receipt from the one or more remote game servers (RGS) data on game events generated in the plurality of games, continuously updating, the tokens balance according to a predefined configuration; wherein the updated tokens balance over a selected time interval or portion thereof constitutes a token balance trail;
receiving, from the player's device, a selection of a Feature from the list of available Features, wherein the Feature is operable in at least one game of the plurality of games,
based on the selection, updating, the tokens balance, by degrading the number of Feature's cost value;
determining a Feature's stake value of the selected Feature, based on the tokens balance trail, and associate the selected Feature with the determined Feature's stake;
adding the selected Feature, to the Feature's balance, thereby enabling operation of the selected Feature, according to the feature's stake.
